(19) Europäisches Patentamt
European Patent Office
Office européen des brevets

(11) Publication number: **0 320 159**
**A1**

# (12) EUROPEAN PATENT APPLICATION

(21) Application number: **88311272.4**

(22) Date of filing: **29.11.88**

(51) Int. Cl.4: **C08K 5/00 , C08L 67/02 , //(C08K5/00,5:04,5:34), (C08K5/00,5:04,5:35)**

(30) Priority: **09.12.87 JP 311547/87**

(43) Date of publication of application: **14.06.89 Bulletin 89/24**

(84) Designated Contracting States: **DE FR GB**

(71) Applicant: **POLYPLASTICS CO. LTD.**
**30, Azuchimachi 2-chome**
**Higashi-ku Osaka-shi Osaka(JP)**

(72) Inventor: **Nakane, Toshio**
**885-11, Miyajima**
**Fuji-shi Shizuoka(JP)**
Inventor: **Kageyama, Yukihiko**
**815, Gendojicho**
**Fujinomiya-shi Shizuoka(JP)**
Inventor: **Konuma, Hiroaki**
**371-7, Inouecho Okitsu**
**Shimizu-shi Shizuoka(JP)**
Inventor: **Hijikata, Kenji**
**8-8, Fujimidai**
**Mishima-shi Shizuoka(JP)**

(74) Representative: **Taylor, Phillip Kenneth et al**
**W.P. THOMPSON & CO. Coopers Building**
**Church Street**
**Liverpool L1 3AB(GB)**

## (54) Flame-retardant resin composition and electric wire.

(57) The invention provides a flame-retardant resin composition characterised in that it comprises (A) an aromatic polyester prepared by condensation polymerization between (a) a component substantially comprising an aromatic dicarboxylic acid or an ester-forming derivative thereof and (b) a component substantially comprising an aliphatic diol or an ester-forming derivative thereof,
(B) 0.1 to 30% by weight based on the total amount of the composition of a compound represented by the general formula (1) or (2)

EP 0 320 159 A1

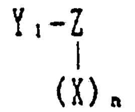

(1)

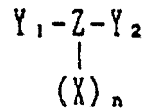

(2)

wherein X represents a halogen atom; $Y_1$ and $Y_2$ each represent a group selected from hydroxyl, carboxyl, glycidyl ester and glycidyl ether groups; Z is a monovalent or divalent organic group and n is an integer of 1 or more and

(C) 0.1 to 30% by weight based on the total amount of the composition of a compound represented by the general formula (3):

$L_1$-M-$L_2$ (3)

wherein M is a divalent organic group $L_1$ and $L_2$ may be the same or different from each other and each represent a 3- to 8-membered cyclic reactive group selected from those having the general formulae (4) to (7):

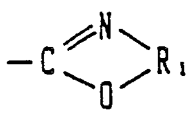

(4)

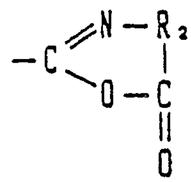

(5)

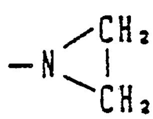

(6)

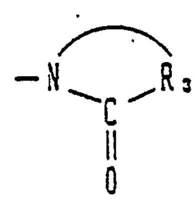

(7)

in which each of $R_1$, $R_2$ and $R_3$ represent a divalent organic group wherein a hydrogen atom directly bonded to the ring may be substituted with an alkyl and/or aryl group.

The invention also includes electric wires coated therewith.

# FLAME-RETARDANT RESIN COMPOSITION AND ELECTRIC WIRE

The present invention relates to a resin which is improved in flame retardance. Particularly, it relates to a flame-retardant resin composition having improved thermal stability and flexibility which can provide an appearance free from bleeding and the flexibility of which is not lowered by its heat history, and an electric wire coated with said composition.

Hitherto, rubbers, polyvinyl chloride, polyethylene, polypropylene and nylon have been used as electric wire coating materials. Because of its good flame retardance properties and its mechanical strength polyvinyl chloride has been most frequently used for that purpose. Recently, however, as the environment in which these coating materials are used has become more severe, particularly where only a restricted space is available for components in space saving designs, the level of the characteristics required of the coating materials have become higher. Thus, not only are the coating materials required to have excellent heat resistance, electrical characteristics and flame retardance, but also to have the capability of forming thin coatings, and at the same time retain the required level of such characteristics even in such thin coatings.

Although fluororesins and crosslinked polyethylene have the requisite level of such characteristics, they are poor in the capability of forming thin coatings, and are expensive. They are thus unsatisfactory.

An increasing interest has been taken in polyalkylene terephthalates such as polyethylene terephthalate and polybutylene terephthalate, because they exhibit a good capability of forming a thin coating and are excellent in mechanical strengths (such as flexibility and wear resistance), heat resistance and electrical characteristics. However, they have insufficient flame retardance properties.

Various methods of imparting flame retardance to these polyalkylene terephthalate resins have been proposed, which may be broadly classified into addition type and reaction type materials. In the addition type materials flame retardance is imparted to the resins by the addition thereto of flame retardants such as antimony hydroxide, antimony trioxide, boron compounds, bromine compounds or phosphorus compounds. However, such addition type materials have disadvantages in that the added flame retardant bleeds from the surface of the resin under prolonged exposure or in a heated environment thereby causing damage to the appearance of the resin and in that the added flame retardant lowers the flexibility of the resin. Reaction type materials are characterised by using a reactive flame-retardant monomer, oligomer or polymer prepared by introducing an epoxy or vinyl group or an ester-forming functional group into a monomer, oligomer or polymer containing bromine or phosphorus atoms and incorporating such a flame-retardant group either directly during the formation of the molecular skeleton or by the reaction of oligomers and/or polymers with each other. These reactive flame retardant materials do not bleed from the resin and also impart flexibility to the resin, so that the reaction type materials are free from the disadvantages of the addition type material. However, the incorporation of a flame-retardant monomer in a polymer skeleton using ordinary polymerisation techniques results in a low degree of polymerisation, so that complicated techniques are required for such incorporation to achieve a satisfactory degree of polymerisation. Although the reaction of reactive flame-retardant oligomer and/or polymers is free from this disadvantage, it has another disadvantage in that interaction between a base polymer and such an oligomer or polymer occurs during kneading to cause lowering in the molecular weight or mechanical properties. Particularly, this disadvantage is significant for polyester or polyamide.

The above-mentioned polyalkylene terephthalate resins owing to their crystalline nature, exhibit significant lowering in their flexibility and mechanical strengths such as impact resistance throughout their heat history including after coating thermal treatment of coatings produced therefrom and the thermal conditions obtaining during use of such coatings, so that the use thereof in the vicinity of a heat source or in an environment such as a restricted space in which heat build up is likely to occur must be avoided. Thus, the possible uses of polyalkylene terephthalate as a coating material for electrical wires is considerably limited.

Attempts have been made to overcome this inherent disadvantage of polyalkylene terephthalate resins by adding an elastomer or an amorphous polymer to the resin to thereby lower the crystallinity thereof as much as possible and by partially crosslinking the resins to thereby maintain their mechanical strength.

Although such addition of an elastomer of an amorphous polymer gives a slight improvement, the improved resin compositions still contain crystalline resin matrix, so that they are not tolerable to a prolonged heat history and also. because the improved resin compositions contain proportionally less crystalline resin they have lower mechanical characteristics (such as wear resistance).

Although some improvements in mechanical characteristics results from crosslinking, the crosslinked resins exhibit lower flexibility. furthermore the crosslinking is difficult to control and results in considerable difficulties in the processing of such crosslinked materials.

The provision of a resin composition which satisfies the requirements of possessing flame-retardant properties, excellent physical characteristics such as thermal stability, flexibility, mechanical strength, and appearance but are also capable of being applied to electric wires as this coating is therefor a highly desirable object.

This object is achieved according to the present invention by providing a flame-retardant resin composition characterised in that it comprises (A) an aromatic polyester prepared by condensation polymerisation between (a) a compound substantially comprising an aromatic dicarboxylic acid or an ester-forming derivative thereof and (b) a component substantially comprising an aliphatic diol or an ester-forming derivative thereof,

(B) 0.1 to 30% by weight based on the total amount of the composition of a compound represented by the general formula

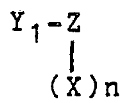
(1)

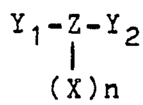
(2)

wherein x represents a halogen atom; $Y_1$ and $Y_2$ each represent a group selected from hydroxyl, carboxyl, glycidyl ester and glycidyl ether groups; Z represents a monovalent or divalent organic group and n is an integer of 1 or more and

(C) 0.1 to 30% by weight based on the total amount of the composition of a compound represented by the general formula:

$L_1$-M-$L_2$ (3)

wherein $L_1$ and $L_2$ may be the same or different from each other and each represents a 3- to 8-membered cyclic reactive group selected from those having the general formulae (4) to (7):

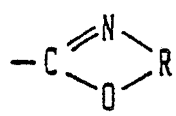
(4)

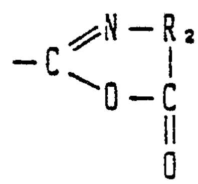
(5)

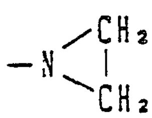
(6)

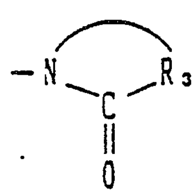
(7)

in which $R_1$, $R_2$ and $R_3$ each represent a divalent organic group and wherein a hydrogen atom directly bonded to the ring may be substituted with an alkyl and/or aryl group and M is a divalent organic group.

The present invention also includes an electric wire coated with the flame-retardant composition of the invention.

Representative examples of component (a) of the aromatic polyester (A) include terephthalic acid and ester-forming derivatives thereof. The component (a) may also contain one or more auxiliary components selected from dicarboxylic acids such as isophthalic, naphthalene carboxylic or naphthalene dicarboxylic acid and ester-forming derivatives thereof, fatty acids such as adipic, sebacic, trimellitic or succinic acid and an ester-forming derivative thereof aromatic hydroxycarboxylic acids such as hydroxybenzoic or hydroxynaphthoic acid and ester-forming derivatives thereof.

Representative examples of the aliphatic diols component (b) of aromatic polyester (A) include $C_{2\ 8}$

low-molecular weight aliphatic glycols such as ethylene glycol, 1,4-butylene glycol, 1,3-propanediol, 1,4-butenediol, 1,6-hexanediol and 1,8-octanediol. A high-molecular weight glycol such as polyalkylene oxide glycol may be used concurrently with the low-molecular weight glycols. Examples of polyalkylene oxide glycols include polyethylene oxide glycol and polybutylene oxide glycol. The concurrent use of such high-molecular weight glycols is very effective in enhancing the elongation of the aromatic polyester as a wire coating material to thereby improve the flexing resistance thereof. Further, the component (b) may also contain, as an auxiliary component, an aromatic alcohol such as bisphenol A, 4,4′-dihydroxybiphenyl or a phosphinic acid derivative having an aromatic diol group; an adduct of an alcohol with an alkylene oxide such as bisphenol A-ethylene oxide (2 mol) adduct or bisphenol A-propylene oxide (2 mol) adduct; a polyhydroxy compound such as glycerin or pentaerythritol or an ester-forming derivative thereof.

Examples of the halogen-containing compound (b) represented by the general formula (1) or (2) include compounds represented by the general formulae (8) to 15):

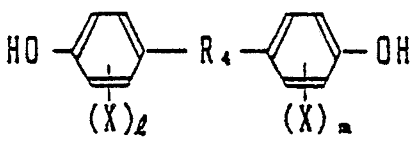
(8)

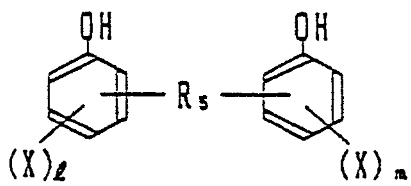
(9)

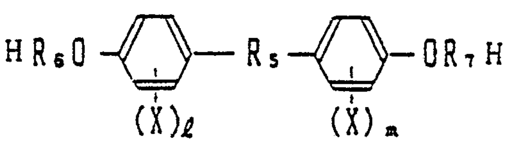
(10)

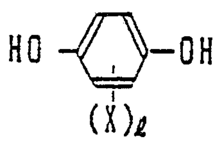

(11)

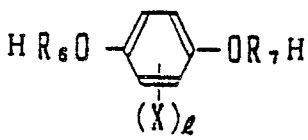

(12)

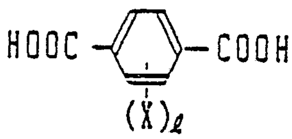

(13)

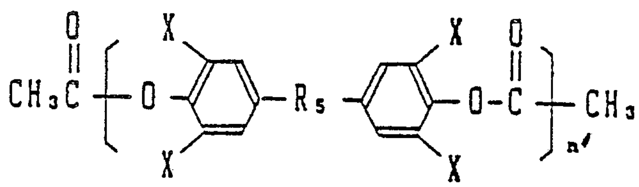

(14)

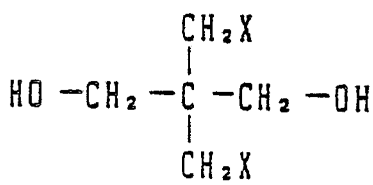

(15)

wherein $R_4$ and $R_5$ each represent a divalent group selected from

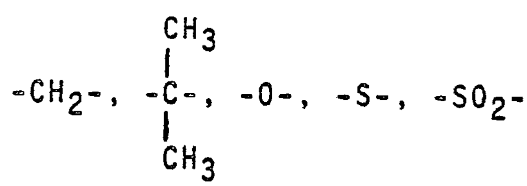

$R_6$ and $R_7$ each represent a divalent group selected from
$-C_2H_4-$, $-C_3H_6$, $-(C_2H_4O)n-$,
$-(C_3H_6O)n-$
X represents a halogen atom preferably a bromine atom ℓ and m each represents an integer of from 1 to 4
n′ represents an integer of 1 or higher.

When the halogen in the above formulas is bromine, examples of the compound represented by the general formula (8) include tetrabromobisphenol A and tetrabromobisphenol sulfone; examples of the compound represented by the general formula (9) include tetrabromobisphenol F ; examples of the compound of the general formula (10) include tetrabromobisphenol A-ethylene oxide (2 mol) adduct, tetrabromobisphenol A-propylene oxide (2 mol) adduct, tetrabromobisphenol sulfone-ethylene oxide (2 mol) adduct and tetrabromobisphenol sulfone-propylene oxide (2 mol) adduct; examples of the compound of the general formula (11) include tetrabromohydroquinone, those of the compound of the formula (12) include tetrabromohydroquinone-ethylene oxide (2 mol) adduct; those of the compound of the formula (13) include tetrabromoterephthalic acid and those of the compound of the formula (14) include polycarbonate of tetrabromo- bisphenol A.

Examples of compounds (B) having the general formula (1) include those of the formulae (16) to (21):-

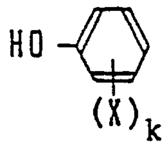
(16)

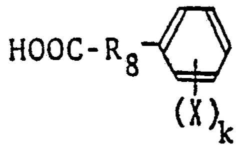
(19)

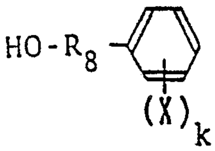
(17)

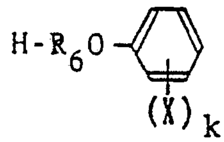
(20)

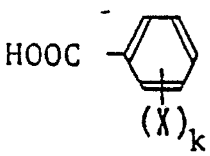
(18)

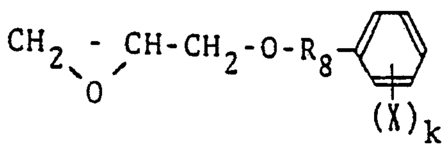
(21)

in which formulae $R_6$ is $-C_2H_4-$, $-C_3H_6-$, oxyethylene, oxypropylene, polyoxyethylene or polyoxypropylene; $R_8$ is an alkylene having 1 to 30 carbon atoms which may have an aryl substituent and k is an integer of 1 to 5.

Examples of compounds having the formulae (16) to (21) are pentabromophenol (16), pentabromo-benzylalcohol (17), pentabromo-benzolic acid (18), an ethylene oxide adduct to pentabromo-phenol (20) and pentabromo-benzyl glycidyl ether (21).

In the formulae (1) and (2), Z is preferably a monovalent or divalent organic group having at least one aromatic group, for example one of those illustrated in formulae (8) to (14) and (16) to (21).

The compound (B) preferably has the general formula (2) and more preferably is a compound having one of the formulae (8) to (13). In formulae (1) and (2), Z is preferably a divalent organic group selected from

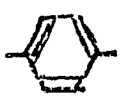 , 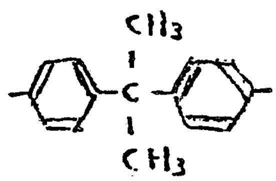 , 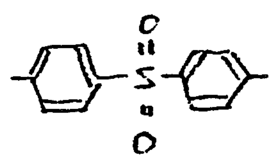 and 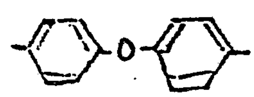

In the compound (C), each of $R_1$, $R_2$ and $R_3$ are preferably an unbranched alkylene group having 1 to 6 carbon atoms which may have a substituent(s) selected from alkyl groups having 1 to 10 carbon atoms and aryl groups having 6 to 12 carbon atoms. Preferably $R_1$ is ethylene, $R_2$ is methylene or ethylene and $R_3$ is a $C_3$ to $C_5$ alkylene group which may have a substituent(s) selected from $C_1$ to $C_6$ alkyl groups and phenyl. M is Formula (3) is preferably a $C_1$ to $C_{10}$ alkylene group or an organic group having at least one aromatic or alicyclic ring.

The nitrogenous 3- to 8-membered cyclic compound (C) represented by the general formula (3) includes various compounds.

The group represented by the formula (4) is preferably one wherein $R_1$ is an ethylene group, i.e., an oxazolinyl group. The oxazolinyl group can be formed by, for example, the reaction of a carboxylic acid with ethanolamine to give a compound of the formula (3).

The compound (C) may also be the reaction product of a dihydroxy or dicarboxylic compound with a bisoxazoline compound, bisoxazolone compound, bisoxazinone, bisaziridine compound or bislactam compound, having terminal groups shown by the formulae (4) to (7).

Particular examples of the bisoxazoline compound are 2,2′-methylenebis(2-oxazoline), 2,2′-ethylenebis-(2-oxazoline), 2,2′-ethylenebis(4-methyl-2-oxazoline), 2,2′-propylenebis(2-oxazoline), 2,2′-tetramethylenebis-(2-oxazoline), 2,2′-hexamethylenebis(2-oxazoline), 2,2′-octamethylenebis(2-oxazoline), 2,2′-p-phenylenebis-(2-oxazoline), 2,2′-p-phenylenebis(4-methyl-2-oxazoline), 2,2′-p-phenylenebis(4-dimethyl-2-oxazoline), 2,2′-p-phenylenebis(4-phenyl-2-oxazoline), 2,2′-m-phenylenebis(2-oxazoline), 2,2′-m-phenylenebis(4-methyl-2-oxazoline), 2,2-m-phenylenebis(4,4-dimethyl-2-oxazoline), 2,2′-m-phenylenebis(4-phenyl-2-oxazoline); 2,2′-o-phenylenebis(2-oxazoline), 2,2′-phenylbis(4-methyl-2-oxazoline), 2,2′-bis(2-oxazoline), 2,2′-bis(4-methyl-2-oxazoline), 2,2′-bis(4-methyl-2-oxazoline) and 2,2′-bis(4-phenyl-2-oxazoline). These oxazoline compounds may be used either alone or as a mixture of two or more of them.

Among the above bisoxazoline compounds, those having an aromatic group are preferred and those containing a phenylene group are most preferred. 2,2′-m-Phenylenebis(2-oxazoline) and 2,2′-p-phenylenebis(2-oxazoline) are particularly preferred.

The group represented by the formula (5) is preferably one wherein $R_2$ is a methylene group, i.e., an oxazolonyl group, or one wherein $R_2$ is an ethylene group, i.e., an oxazinonyl group. These groups can be easily formed by dehydrating N-acyl-$\alpha$- or $\beta$-amino carboxylic acid with, for example, acetic anhydride.

Examples of such bisoxazolone compounds are 2,2′-bis(5-(4H)-oxazolone), 2,2′-methylenebis(5(4H)-oxazolone), 2,2′-ethylenebis(5(4H)-oxazolone), 2,2′-tetramethylenebis(5(4H)-oxazolone), 2,2′-hexamethylenebis(5(4H)-oxazolone), 2,2′-decamethylenebis(5(4H)-oxazolone), 2,2′-p-phenylenebis(5(4H)-oxazolone), 2,2′-m-phenylenebis(5(4H)-oxazolone), 2,2′-naphthalenebis(5(4H)-oxazolone), 2,2′-diphenylenebis-(5(4H)-oxazolone), 2,2′-(1,4-cyclohexylene)-bis(5(4H)-oxazolone), 2,2′-bis(4-methyl-5(4H)-oxazolone), 2,2′-methylenebis(4-methyl-5(4H)-oxazolone), 2,2′-ethylenebis(4-methyl-5(4H)-oxazolone), 2,2′-tetramethylenebis(4-methyl-5(4H)-oxazolone), 2,2′-hexamethylenebis(4-methyl-5(4H)-oxazolone), 2,2′-decamethylenebis(4-methyl-5(4H)-oxazolone), 2,2′-p-phenylenebis(4-methyl-5(4H)-oxazolone), 2,2′-m-phenylenebis(4-methyl-5(4H)-oxazolone), 2,2′-naphthalenebis(4-methyl-5(4H)-oxazolone), 2,2′-diphenylenebis(4-methyl-5(4H)-oxazolone), 2,2′-(1,4-cyclohexylene)bis(4-methyl-5(4H)-oxazolone), 2,2′-bis-(4,4-dimethyl-5(4H)-oxazolone), 2,2′-methylenebis(4,4-dimethyl-5(4H)-oxazolone), 2,2′-ethylenebis(4,4-dimethyl-5(4H)-oxazolone), 2,2′-tetramethylenebis(4,4-dimethyl-5(4H)-oxazolone), 2,2′-hexamethylenebis-(4,4-dimethyl-5(4H)-oxazolone), 2,2′-octamethylenebis(4,4-dimethyl-5(4H)-oxazolone), 2,2′-decamethylenebis(4,4-dimethyl-5(4H)-oxazolone), 2,2′-p-phenylenebis(4,4-dimethyl-5(4H)-oxazolone), 2,2′-m-phenylene bis(4,4-dimethyl-5-(4H)-oxazolone), 2,2′-naphthalenebis(4,4-dimethyl-5(4H)-oxazolone), 2,2′-diphenylenebis(4,4-dimethyl-5(4H)-oxazolone), 2,2′-(1,4-cyclohexylene)-bis(4,4-dimethyl-5(4H)-oxazolone), 2,2′-bis(4-isopropyl-5(4H)-oxazolone), 2,2′-methylenebis(4-isopropyl-5(4H)-oxazolone), 2,2′-ethylenebis(4-isopropyl-5(4H)-oxazolone), 2,2′-tetramethylenebis(4-isopropyl-5(4H)-oxazolone), 2,2′-hexamethylenebis(4-isopropyl-5(4H)-oxazolone), 2,2′-p-phenylenebis(4-isopropyl-5(4H)-oxazolone), 2,2′-m-phenylenebis(4-isopropyl-5(4H)-oxazolone(, 2,2′-naphthalenebis(4-isopropyl-5(4H)-oxazolone), 2,2′-bis(4-isobutyl-5(4H)-oxazolone), 2,2′-methylenebis(4-isobutyl-5(4H)-oxazolone), 2,2′-ethylenebis(4-isobutyl-5(4H)-oxazolone), 2,2′-tetramethylenebis(4-isobutyl-5(4H)-oxazolone), 2,2′-hexamethylenebis(4-isobutyl-5(4H)-oxazolone), 2,2′-p-phenylenebis(4-isobutyl-5(4H)-oxazolone), 2,2′-m-phenylenebis(4-isobutyl-5(4H)-oxazolone) and 2,2′-naphthalenebis(4-isobutyl-5(4H)-oxazolone.

Examples of such bisoxazinone compounds include 2,2′-bis(3,1-benzoazin-4-one), 2,2′-methylenebis-(3,1-benzoxazin-4-one), 2,2′-ethylenebis(3,1-benzoazin-4-one), 2,2′-tetramethylenebis(3,1-benzoxazin-4-one), 2,2′-hexamethylenebis(3,1- benzoxazin-4-one), 2,2′-decamethylenebis(3,1-benzoxazin-4-one), 2,2′-p-phenylenebis(3,1-benzoxazine-4-one), 2,2′-m-phenylenebis(3,1-benzoxazin-4-one), 2,2′-naphthalenebis(3,1-benzoxazin-4-one), 2,2′-(4,4′-diphenylene)bis(3,1-benzoxazin-4-one), 2,2′-(1,4-cyclohexylene)bis(3,1-benzoxazin-4-one), 2,2′-bis(4,4-dihydro-1,3-6H-oxazin-6-one), 2,2′-methylenebis(4,5-dihydro-1,3,6H-oxazin-6-one), 2,2′-ethylenebis(4,5-dihydro-1,3,6H-oxazin-6-one), 2,2′-tetramethylenebis(4,5-dihydro-1,3,6H-oxazin-6-one), 2,2′-p-phenylenebis(4,5-dihydro-1,3,6H-oxazin-6-one), 2,2′-m-phenylenebis(4,5-dihydro-1,3,6H-oxazin-6-one), 2,2′-bis(4-methyl-5-hydro-1,3,6H-oxazin-6-one), 2,2′-ethylenebis(4-methyl-5-hydro-1,3,6H-oxazin-6-one), 2,2′-o-phenylenebis(4-methyl-5-hydro-1,3,6H-oxazin-6-one), 2,2′-m-phenylene(4-methyl-5-hydro-1,3,6H-oxazin-6-one), 2,2′-p-phenylenebis(4-hydro-5-methyl-1,3,6H-oxazin-6-one) and 2,2-m-phenylene bis-(4-hydro-5-methyl-1,3,6H-oxazin-6-one).

Compounds of the formula (3) wherein $L_1$ and/or $L_2$ are each an aziridinyl group represented by the formula (6) can be easily prepared by reacting ethyleneimine with an acid chloride or an isocyanate.

Preferred examples of the compound of the formula (3) wherein $L_1$ and/or $L_2$ are each a lactam group represented by the formula (7) include pyrrolidone, piperidone and caprolactam which correspond to compounds of the formula (3) having a group of the formula (7) wherein $R_3$ is a trimethylene, tetramethylene and pentamethylene group, respectively. These compounds can be easily prepared by reacting a lactam with an acid chloride or an isocyanate similarly to the preparation of the above compound

having a group of the formula (6).

Examples of the acid chloride which may be used in the above reactions include those derived from terephthalic, isophthalic, naphthalenedicarboxylic, adipic, sebacic, trimellitic and succinic acids.

Examples of the diisocyanate which may be used in the above reactions are toluene diisocyanate. methylenediphenyl diisocyanate, xylylene diisocyanate, naphthylene diisocyanate, 3,3′-dimethyldiphenyl 4,4′-diisocyanate, hexamethylene diisocyanate, isophorone diisocyanate, hydrogenated methylenebiphenyl diisocyanate, hydrogenated toluene diisocyanate, lysine diisocyanate and bis(2-isocyanatoethyl) fumarate.

In the composition according to the present invention which comprises the aromatic polyester (A), the halogenated compound (B) and the nitrogenous 3- to 8-membered cyclic compound (C), the compounds (B) and (C) are preferably present each in an amount of 0.1 to 30 % by weight based on the total amount of the composition and at a molar ratio of the compound (B) to the compound (C) of between 2 : 1 and 1 : 2.

When the composition of the present invention is used as a coating material in the field wherein a high oxygen index is required as a service condition, such an objective oxygen index can be attained by suitably selected the content of the compound (B) to thereby control the halogen content of the composition.

The aromatic polyester (A) may be prepared by a conventional process such as melt polymerization, interfacial polymerization or solid-phase polymerization and may have an intrinsic viscosity of about 0.5 to 3.0.

The composition of the present invention exhibits excellent performance, even when it consists of components (A), (B) and (C). However, if desired, the composition of the invention may contain, with the purpose of enhancing the performance, a stabilizer such as antioxidant or ultraviolet absorber, antistatic agent, other flame-retardant or flame-retardant auxiliary, coloring agent such as dye or pigment, lubricant for improving the fluidity and mold release characteristics, crystallization accelerator (nucleating agent), inorganic substance or the like.

The stabilizer may be for example, selected from hindered phenols, amines and phosphorus compounds.

Examples of such hindered phelons are 2,2′-methylenebis(4-methyl-6-t-butylphenol), hexamethylene glycol bis(3,5-di-t-butyl-4-hydroxyhydrocinnamate), tetrakis[methylene(3,5-di-t-butyl-4-hydroxyhydrocinnamate)]methane, triethylene glycol bis-3-(3-t-butyl-4-hydroxy-5-methylphenyl)propionate, 1,3,5-trimethyl-2,4,6-tris(3,5-di-t-butyl-4-hydroxybenzyl)-benzene, n-octadecyl 3-(4′-hydroxy-3′,5′-di-t-butylphenyl)-propionate, 4,4′-methylenebis(2,6-di-t-butylphenol), 4,4′-butylidenebis(6-t-butyl-3-methylphenol), 2,2′-thiodiethyl bis[3-(3,5-di-t-butyl-4-hydroxyphenyl)propionate, distearyl 3,5-di-t-butyl-4-hydroxybenzylphosphonate and 2-t-butyl-6-(3-t- butyl-5-methyl-2-hydroxybenzyl)-4-methylphenyl acrylate. These compounds may be used either alone or as a mixture of two or more of them. Among the compounds described above, hexamethylene glycol bis (3,5-di-t-butyl-4-hydroxyhydrocinnamate), tetrakis[methylene(3,5-di-t-butyl-4-hydroxyhydrocinnamate)] methane and triethylene glycol bis-3-(3-t-butyl-4-hydroxy-5-methylephenyl) propionate are particularly preferred.

Examples of such amines are N-phenyl-N′-isopropyl-p-phenylemediamine, N,N′-diphenyl-p-phenylenediamine, 4,4′-bis(4-α,α-dimethylbenzyl)-diphenylamine, condensates of diphenylamine with acetone, N-phenylnaphthylamine and N,N′-di-β-naphthylphenylenediamine.

Examples of such phosphorus compounds are phosphonite compounds represented by the general formula:

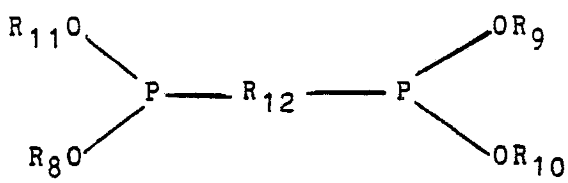

(16)

wherein $R_8$, $R_9$, $R_{10}$ and $R_{11}$ may be the same or different and each represent an alkyl, substituted alkyl, aryl or substituted aryl group having 1 to 25 carbon atoms and $R_{12}$ stands for an alkylene, substituted alkylene, arylene or substituted arylene having 4 to 33 carbon atoms. Thus for example $R_8$, $R_9$, $R_{10}$ and $R_{11}$ in Formula (16) may each be any of methyl, ethyl, butyl, octyl, decyl, lauryl, tridecyl, stearyl, phenyl and alkyl-and/or alkoxy-substituted phenyl groups, while $R_{12}$ in Formula (16) may be any of butylene, octylene, phenylene, naphthylene and diphenylene groups and groups represented by the formula:

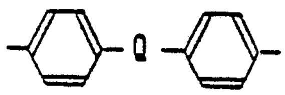

(wherein Q is an oxy, sulfonyl, carbonly, methylene, ethylidene, butylidene, isopropylene or diazo group). A particularly preferred example of a phosphonite of Formula (16) is tetrakis(2,4-di-t-butylphenyl)4,4′-diphenylenephosphonite.

The stabiliser described above may be present in an amount of 0.01 to 5% by weight, preferably 0.1 to 3% by weight, based on the total amount of the composition.

Examples of flame-retardant auxiliary compounds are antimony compounds such as antimony trioxide and antimony halides; metal compounds including zinc compounds and bismuth compounds; magnesium hydroxide and clayey silicate such as asbestos.

Suitable inorganic substances which may be used as fillers include inorganic fibres such as glass fibre, ceramic fibre, boron fibre, potassium titanate fibre and asbestos; powdery or granular materials such as potassium carbonate, highly dispersible silicate, alumina, aluminium hydroxide, talc, clay, mica, glass flake, glass powder, glass bead, quartz powder, quartz sand, wollastonite, carbon black, barium sulfate, plaster of Paris, silicon carbide, alumina, boron nitride and silicon nitride; flaky inorganic compounds and whiskers.

These inorganic fillers may be used alone or as a mixture of two or more of them.

Further, the composition of the present invention may contain one or more organic high-molecular weight substances an auxiliary components for the purpose of improving the melt extrusion coating properties, lubricity and flexibility of the composition. Examples of such high-molecular weight substances are polyesters having skeletons other than those of polyester (A), polyamide, carboxylic acid-modified olefins and copolymers thereof, polyolefins such as polyethylene, polypropylene and polybutylene, polyacrylates, modified polyolefins such as ABS, engineering plastics such as polycarbonate, polyphenylene oxide, polyphenylene sulfide and fluororesins and elastomeric polymers such as polyurethane, butyl rubber, ethylene-propylene rubber and various elastomers.

The composition of the present invention can be prepared by kneading a mixture comprising the essential components (A), (B) and (C) with an ordinary melt mixture such as an extruder and pelletizing the kneaded mixture.

The composition of the present invention is useful as a coating material for electrically conductive wires. The coating of an electrically conductive wire with the composition of the present invention can be carried out by conventional processes.

For example, a running conductive wire may be coated with a coating material comprising the composition of the present invention by melt extrusion. In this process, the extrusion of the composition and the running of the wire may be carried out coaxially. Alternatively, the extrusion may be carried out by using a crosshead having a certain angle with respect to the direction of the movement of the running wire.

Preferably the extruder used in the coating of electric wires is of the screw type, because the use thereof facilitates the control of the flow rate of the coating material.

Unevenness in the coating thickness may be detected by an X-ray method, a supersonic wave method or the like.

The eccentricity due to unevenness in the coating thickness is indicated by the concentricity ($e_c$). The higher the value of $e_c$, the better. The concentricity is preferably 65% or above, still preferably 70% or above.

$$e_c = \frac{e_{min}}{e_{max}} \times 100$$

$e_{min}$: minimum section thickness of coating

$e_{max}$: maximum section thickness of coating

The unevenness in the coating thickness may be controlled by detecting the unevenness with a detector and adjusting, in the centre of a die of a screw extruder, the clearance between the die and an electric wire manually automatically or by concurrently controlling the flow rate of the coating material and the temperature and pressure.

The application of a non-eccentric head is effective in reducing the unevenness in coating thickness.

If necessary, an electric wire which has been coated with the coating material of the present invention

and shaped may be passed through a heating zone to thereby enhance the mechanical strengths of the coating. The temperature of the heating zone is lower than the melting point of the coating material and higher than the glass transition temperature thereof.

The lowering in the physical properties of flame-retardant compositions throughout their heat history is substantially less in the flame-retardant composition of the present invention as compared with the polyester coating material of the prior art and therefore has the advantages that the material can be applied to electric wires to be used in the neighbourhood of a heat source, in an engine compartment of a vehicle transport or in the heat build up part of an electric appliance.

The coating material of the present invention may be applied in a reduced thickness without damaging the mechanical and electrical characteristics and is excellent in flexing resistance, so that the use thereof brings about dramatic enhancement in utilisation of a limited space. Thus the composition of the present invention has characteristics as described above, which enables its use in a wide variety of appliances and parts wherein such characteristics are desired. Particularly, the coating material may be favourably applied to electric wires to be used in fields characterised by limited spatial capacity and highly integrated information, for example, a space rocket, an airplane, transport (such as an automobile), an electric appliance or a computer or information appliance.

The present invention will now be further illustrated by reference to the following Examples, though it is not limited to them.

## Example 1

100 parts by weight of polybutylene terephthalate (PBT) (intrinsic viscosity: 0.95) was powder-mixed with 10 parts by weight of tetrabromoterephthalic acid (hereinafter abbreviated to "TBTA") and 6 parts by weight of 2,2-m-phenylenebis(2-oxazoline) (hereinafter abbreviated to "PBO") and the obtained mixture was homogeneously kneaded and pelletized with an ordinary extruder.

The obtained pellets were moulded into test pieces with an inection moulding machine. These test pieces were examined for physical properties.

The physical properties were each determined as follows:

The tensile strength and elongation (%) were determined according to ASTM D 638.

The dieletric breakdown was determined according to the short-time method of ASTM D 149, while the dielectric constant was determined according to DISO with 1 kHz.

The flame retardance was determined by the test method according to UL-94 V and the case wherein the fire went out within 30 seconds was evaluated as "O", while the case wherein it did not go out therewithin was evaluated as "X".

The oxygen index was determined according to JIS K 7201.

The appearance was determined by observing the surface of the test piece which had been stored at 120°C for 72 hours and the case wherein an abnormal phenomenon such as bleed or blister was observed was evaluated as "X", while the case wherein no abnormal phenomenon was observed was evaluated as "O".

Further, the piece for tensile test was stored in a thermostatic chamber at 120°C for 500 hours to determine the elongation and elongation retention in a similar manner to one described above.

In addition, an electric wire was produced from a round compression-stranded conductor made of copper and having an outer diameter of about 1.9mm by coating the conductor with the above composition so as to give a coating thickness of 0.3mm. This electric wire was stored in a thermostatic chamber at 120°C for 500 hours and the flexing resistance thereof was determined by subjecting the wire to flexing of 90° ten times after which the surface of the wire was inspected. Cases where a fracture or fine crack was observed were evaluated as "X", while cases where no abnormal phenomenon was observed were evaluated as "O".

The results are shown in Table 1.

## Example 2

100 parts by weight of the same PBT as that used in Example 1 was powder-mixed with 10 parts by weight of tetrabromobisphenol A (hereinafter abbreviated to "TBBA") and 6 parts by weight of PBO and the obtained mixture was kneaded and pelletized with an ordinary extruder.

The resin composition thus prepared was examined for physical properties in a similar manner to that

described in Example 1.

The results are shown in Table 1.

Example 3

100 parts by weight of the same PBT as that used in Example 1 was powder-mixed with 10 parts by weight of TBTA and 8 parts by weight of diphenylmethane-bis-4,4′-N,N″-diethyleneurea (hereinafter abbreviated to "MDIA"). The obtained mixture was kneaded and pelletized with an ordinary extruder.

The obtained resin composition was evaluated in a similar manner to that described in Example 1.

The results are shown in Table 1.

Comparative Example 1

100 parts by weight of the same PBT as that used in Examples 1 to 3 was powder-mixed with 10 parts by weight of decabromodiphenyl ether (hereinafter abbreviated to "DBDPE").

The obtained mixture was kneaded and pelletized with an ordinary extruder.

The obtained resin composition was evaluated in a similar manner to that used in Example 1.

The results are shown in Table 1.

Example 4

100 parts by weight of polyethylene terephthalate (PET) (intrinsic viscosity: 1.10) was powder-mixed with 10 parts by weight of TBTA and 6 parts by weight of PBO. The obtained mixture was kneaded and pelletized with an ordinary extruder.

The obtained resin composition was evaluated in a similar manner to that used in Example 1.

The results are shown in Table 1.

Comparative Example 2

80 parts by weight of the same PET as that used in Example 4 was powder-mixed with 10 parts by weight of DBDPE and the obtained mixture was kneaded and pelletized with an ordinary extruder.

The obtained resin composition was evaluated in a similar manner to that described in Table 1.

The results are shown in Table 1.

Table 1

| | | Ex. 1 | Ex. 2 | Ex. 3 | Comp. Ex. 1 | Ex. 4 | Comp Ex. 2 |
|---|---|---|---|---|---|---|---|
| Polyester resin (parts by weight) | | **PBT** (100) | | | | **PET** (100) | |
| Additives | TBTA (parts by weight) | 10 | — | 10 | — | 10 | — |
| | TBBA ( " ) | — | 10 | — | — | — | — |
| | DBDPE( " ) | — | — | — | 10 | — | 10 |
| | PBO ( " ) | 6 | 6 | — | — | 6 | — |
| | MDIA ( " ) | — | — | 8 | — | — | — |
| Tensile strength (kg / $cm^2$) | | 579 | 574 | 565 | 554 | 730 | 620 |
| Tensile elongation (%) | | 280 | 280 | 265 | 170 | 280 | 120 |
| Izod impact strength (kg•cm / cm) (notched) | | 14 | 14 | 13 | 4.0 | 18 | 10 |
| Dielectric breakdown | | 16 | 16 | 16 | 15 | 16 | 16 |
| Appearance | | ○ | ○ | ○ | × | ○ | × |
| Oxygen index | | 27 | 27 | 27 | 28 | 27 | 28 |
| After the thermal treatment for 500 hours | tensile strength (kg/$cm^2$) | 585 | 580 | 577 | 569 | 760 | 690 |
| | elongation retention (%) | 83 | 81 | 77 | 34 | 59 | 21 |
| | flexing resistance | ○ | ○ | ○ | × | ○ | × |

## Claims

1. A flame-retardant resin composition characterised in that it comprises (A) an aromatic polyester prepared by condensation polymerization between (a) a component substantially comprising an aromatic dicarboxylic acid or an ester-forming derivative thereof and (b) a component substantially comprising an aliphatic diol or an ester-forming derivative thereof,

(B) 0.1 to 30% by weight based on the total amount of the composition of a compound represented by the general formula (1) or (2)

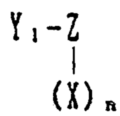

(1)

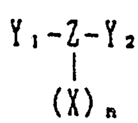

(2)

wherein X represents a halogen atom; $Y_1$ and $Y_2$ each represent a group selected from hydroxyl, carboxyl, glycidyl ester and glycidyl ether groups; Z is a monovalent or divalent organic group and n is an integer of 1 or more and

(C) 0.1 to 30% by weight based on the total amount of the composition of a compound represented by the general formula (3):

$L_1$-M-$L_2$ (3)

wherein M is a divalent organic group $L_1$ and $L_2$ may be the same or different from each other and each represent a 3- to 8-membered cyclic reactive group selected from those having the general formulae (4) to (7):

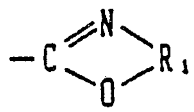 (4) 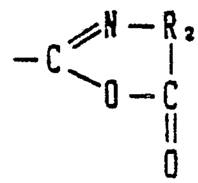 (5)

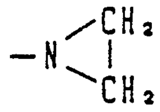 (6) 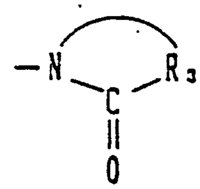 (7)

in which each of $R_1$, $R_2$ and $R_3$ represent a divalent organic group wherein a hydrogen atom directly bonded to the ring may be substituted with an alkyl and/or aryl group.

2. A flame-retardant resin composition as claimed in claim 1, characterised in that said compound (B) represented by the general formula (1) or (2) has a molecular weight of 500 to 5,000.

3. A flame-retardant resin composition as claimed in claim 1 or 2, characterised in that said compound (B) represented by the general formula (2) is a halogenated diol and/or a halogenated dicarboxylic acid.

4. A flame-retardant resin composition as claimed in any of claims 1 to 3, characterised in that the halogen atom (X) in the compound (B) represented by the general formula (1) or (2) is bromine.

5. A flame-retardant resin composition as claimed in any of claims 1 to 4, characterised in that it further contains a stabilizer in an amount of 0.1 to 3% by weight based on the total amount of the composition.

6. An electric wire coated with a coating material comprising a flame-retardant resin composition as defined in any of claims 1 to 5.

7. An electric wire as set forth in claim 6, wherein said wire is a low-voltage wire.

European Patent Office

# EUROPEAN SEARCH REPORT

Application Number

EP 88 31 1272

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 098 231 (DYNAMIT NOBEL AG)<br>* Claims 1,23,24; examples 16,17,19-21; page 2, lines 35-46 *<br>--- | 1-5 | C 08 K 5/00<br>C 08 L 67/02<br>H 01 B 3/42 //<br>(C 08 K 5/00<br>C 08 K 5:04<br>C 08 K 5:34 )<br>(C 08 K 5/00<br>C 08 K 5:04<br>C 08 K 5:35 ) |
| Y | AT-A- 313 585 (CELANESE CORP.)<br>* Claims 1,6-8 *<br>----- | 1-5 | |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 15-03-1989 | WILSON A.J.D. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)